# EUROPÄISCHE PATENTSCHRIFT

(11) **EP 4 446 279 B1**
(45) Veröffentlichungstag und Bekanntmachung des Hinweises auf die Patenterteilung: **15.07.2026**
(21) Anmeldenummer: 24197186.0
(22) Anmeldetag: 03.12.2019
(51) Int. Cl.: F16C 33/04, B67C 3/00

(54) **FÜHRUNGSRING ZUM FÜHREN ZWEIER KONZENTRISCH ZUEINANDER ANGEORDNETER BAUTEILE IN EINEM FÜLLORGAN**
GUIDE RING FOR GUIDING TWO CONCENTRIC COMPONENTS IN A FILLING ELEMENT
BAGUE DE GUIDAGE POUR GUIDER DEUX COMPOSANTS CONCENTRIQUES DANS UN ORGANE DE REMPLISSAGE

(30) Priorität: 03.12.2018 DE 102018130741
(43) Veröffentlichungstag der Anmeldung: 16.10.2024
(62) Teilanmeldung aus: 19213203.3
(73) Patentinhaber: KRONES AG, 93073 Neutraubling (DE)
(72) Erfinder: Brey, Christian, 93073 Neutraubling (DE); Schmid, Martina, 93073 Neutraubling (DE)
(74) Vertreter: Nordmeyer, Philipp Werner

(56) Entgegenhaltungen:
- DE-A1- 2 638 749
- DE-A1- 3 244 383
- DE-U1- 8 029 789

## Beschreibung

### Technisches Gebiet

Die vorliegende Erfindung betrifft einen Führungsring zum Führen zweier konzentrisch zueinander angeordneter Bauteile in einem Füllorgan.

### Stand der Technik

Es ist bekannt, zum Befüllen eines Behälters mit einem fließfähigen Füllgut Füllorgane zu verwenden. Hierbei ist es bekannt, zum Zentrieren des zu befüllenden Behälters relativ zum Füllorgan eine Zentriervorrichtung, eine sogenannte Zentrierglocke, vorzusehen. Die Zentrierglocke hat zum einen die Aufgabe, den Behälter relativ zum Füllorgan zu zentrieren. Fernerhin kann es vorgesehen sein, dass mittels der Zentrierglocke ebenfalls eine Abdichtung zwischen der Öffnung des Behälters und dem Füllorgan bereitgestellt wird.

Die Zentrierglocke ist hierfür relativ zum restlichen Füllorgan zumindest zum Füllrohr entlang einer Achse, welche zumeist der Längsachse des Füllrohrs des Füllorgans entspricht, beweglich angeordnet. Hierbei ist es bekannt, die Zentrierglocke gegenüber dem Füllorgan an einer radial außen gelegenen Seite der Zentrierglocke über Kolbenführungsbänder zu führen. Um eine Abdichtung zu erzielen, ist zwischen den Kolbenführungsbändern eine Dichtung, beispielsweise in Form eines pneumatischen Kolbendichtrings, vorgesehen.

Derartig ausgebildete Füllorgane sind relativ aufwendig zu reinigen. Wird beispielsweise eine sogenannte "cleaning in place" CIP-Reinigung des Füllorgans durchgeführt, so gelangt das zur Reinigung verwendete Reinigungsmedium lediglich an eines der beiden Kolbenführungsbänder, nämlich jenes, welches der Dichtung vorgelagert ist. Das Kolbenführungsband jenseits der Dichtung wird dadurch hingegen nicht mit gereinigt, so dass es einer separaten Reinigungsmittelzufuhr von der anderen Seite der Dichtung aus bedarf. Zudem liegen nach einem Reinigen oberhalb der Dichtung und unterhalb einer Oberkante der Zentrierglocke weiterhin Reinigungsmedium, Wasser und/oder Produktreste vor, welche zu einer Verunreinigung des Füllguts bei einer erneuten Abfüllung führen können. Der vorgenannte Raum kann dabei nicht leerlaufen. Um zu verhindern, dass das Füllgut durch Produktreste oder Reinigungsmedium kontaminiert wird, ist für das Füllorgan ein Nachspülen zumindest mit Wasser erforderlich.

Die DE 32 44 383 A1 beschreibt eine Kugelgelenklagerung mit einer längsgeschlitzten Buchse, die alternierend angeordnet Stützbereiche und die Gleitbereiche aufweist. Die DE 80 29 789 U1 beschreibt einen Gleit- und Führungsring aus Kunststoff.

### Darstellung der Erfindung

Ausgehend von dem bekannten Stand der Technik ist es eine Aufgabe der vorliegenden Erfindung, einen verbesserten Führungsring zum Führen zweier konzentrisch zueinander angeordneter Bauteile bereitzustellen.

Die Aufgabe wird durch einen Führungsring mit den Merkmalen des Anspruchs 1 gelöst. Vorteilhafte Weiterbildungen ergeben sich aus den Unteransprüchen, der Beschreibung und den beigefügten Figuren.

Entsprechend wird ein Führungsring zum Führen zweier konzentrisch zueinander angeordneter Bauteile, bevorzugt einer Zentrierglocke gegenüber einem Füllrohr, in einem Füllorgan vorgeschlagen, welcher einen im Wesentlichen kreisringsegmentförmigen Grundkörper umfasst. Der Führungsring ist ferner dadurch gekennzeichnet, dass an dem Grundkörper eine Mehrzahl von voneinander beabstandeten, radial auf einer ersten Seite des Grundkörpers vorstehenden Gleitbereichen zum Gleiten über eine zylindrische Oberfläche und eine Mehrzahl von voneinander beabstandeten, radial auf einer der ersten Seite gegenüberliegender zweiten Seite vorstehenden Stützbereichen zum radialen oder radialen und axialen Abstützen gegen zumindest eine Abstützfläche angeordnet sind.

Dadurch, dass an dem Grundkörper eine Mehrzahl von voneinander beabstandeten, radial auf einer ersten Seite des Grundkörpers vorstehenden Gleitbereichen zum Gleiten über eine zylindrische Oberfläche und eine Mehrzahl von voneinander beabstandeten, radial auf einer der ersten Seite gegenüberliegender zweiten Seite vorstehenden Stützbereichen zum radialen oder radialen und axialen Abstützen gegen zumindest eine Abstützfläche angeordnet sind, ist es möglich, das erste Bauteil, bevorzugt die Zentrierglocke, an einer radial innen gelegenen Seite des ersten Bauteils, bevorzugt der Zentrierglocke, an einer Außenseite des zweiten Bauteils, bevorzugt des Füllrohrs, des Füllorgans zu führen. Dadurch, dass die Gleitbereiche und die Stützbereiche jeweils radial vorstehen, kommen nur diese Bereiche mit dem ersten Bauteil, bevorzugt der Zentrierglocke, und dem zweiten Bauteil, bevorzugt dem Füllrohr, in Kontakt. Dadurch sind etwa zwischen der Innenseite der Zentrierglocke und der Außenseite des Füllrohrs in den Bereichen, wo sich lediglich der Grundkörper erstreckt, Strömungskanäle bereitgestellt, in welchen ein Medium wie beispielsweise ein Reinigungsfluid oder aus dem Behälter während des Befüllens mit dem Füllgut verdrängtes Gas, wie beispielsweise Luft passieren kann.

Mit anderen Worten kann ein derart ausgebildeter Führungsring in einem Medienkanal, welcher zwischen der Außenseite des Füllrohrs und der Innenseite der sich radial außerhalb des Füllrohrs erstreckenden Zentrierglocke ausgebildet ist, angeordnet werden, ohne eine signifikante Beeinträchtigung eines möglichen Medienstroms durch den Medienkanal zu verursachen.

Ferner kann eine Baugröße des Füllorgans radial zur Bewegungsachse der Zentrierglocke, welche bevorzugt eine Längsachse des Füllrohrs entspricht, mit einer im Vergleich zu herkömmlichen Vorrichtungen reduzierten Breite ausgebildet werden, da radial außerhalb der Zentrierglocke kein Stützelement samt Spalt zum Aufnehmen der Kolbenführungsbänder vorzusehen ist. Aufgrund einer damit einhergehenden Materialeinsparung am Füllorgan kann ein derartig aufgebautes Füllorgan ferner kostengünstiger sein.

Ein derartiger Führungsring kann ferner direkt zwischen dem Füllrohr und der Zentrierglocke angeordnet werden. Dies kann den weiteren Vorteil haben, dass wenn zum Führen der Zentrierglocke gegenüber dem Füllrohr zwei Führungsringe vorgesehen sind, diese in axialer Richtung des Füllrohrs weiter auseinander angeordnet werden können, als dies aufgrund des zur Verfügung stehenden Bauraums bei Kolbenführungsringen, welche radial außerhalb der Zentrierglocke angeordnet sind, möglich ist.

Gemäß einer Weiterbildung entspricht die erste Seite in radialer Richtung gesehen einer Innenseite des Grundkörpers und die zweite Seite in radialer Richtung gesehen einer Außenseite des Grundkörpers. Durch diese Ausgestaltung ist es möglich, dass sich der Führungsring an der Zentrierglocke abstützt und über das Füllrohr gleiten kann. Mit anderen Worten kann dadurch der Führungsring relativ zur Zentrierglocke an einer festen Position gehalten werden, wobei sich Zentrierglocke und Führungsring gemeinsam relativ zum Füllrohr verschieben können. Es hat sich herausgestellt, dass dadurch insbesondere ein Zusammenbau des Füllorgans sehr einfach erfolgen kann. Der Führungsring kann dabei mit der Zentrierglocke vormontiert werden und die so entstandene Baugruppe anschließend auf das Füllrohr aufgeschoben werden. Es ist insbesondere auch eine Wartung des Füllorgans, beispielsweise ein Austausch eines Führungsrings, ohne großen Aufwand möglich.

Es kann die erste Seite auch in radialer Richtung gesehen einer Außenseite des Grundkörpers entsprechen und die zweite Seite in radialer Richtung gesehen demgemäß einer Innenseite des Grundkörpers entsprechen. Hierdurch kann der Führungsring an dem Füllrohr abgestützt werden und die Zentrierglocke sich relativ zu dem Füllrohr und dem Führungsring verschieben. Auch in dieser Ausgestaltung sind eine besonders einfache Fertigung des Füllorgans und eine unkomplizierte Wartung ermöglicht.

Gemäß einer Weiterbildung weisen die Gleitbereiche jeweils mindestens eine Gleitfläche auf, wobei die Gleitflächen bevorzugt in radialer Richtung auf einem Gleitteilkreis angeordnet sind, wobei bevorzugt der Radius des Gleitteilkreises kleiner oder gleich einem Innenradius des Grundkörpers ist, wenn die erste Seite der Innenseite entspricht, oder der Radius des Gleitteilkreises gleich oder größer einem Außenradius des Grundkörpers ist, wenn die erste Seite der Außenseite des Grundkörpers entspricht. Dadurch ist es möglich, dass der Grundkörper an der Seite, auf welcher die Gleitbereiche relativ zum Grundkörper vorstehen, nicht mit der zylindrischen Fläche, mit welcher die Gleitbereiche in Kontakt stehen, in Berührung kommt. Insbesondere wenn der Bereich, in welchem der Führungsring angeordnet ist, als Medienkanal ausgebildet ist, kann zwischen dem Grundkörper und der zylindrischen Oberfläche ein Strömungskanal bereitgestellt werden. Zudem erfährt der Grundkörper keinerlei oder einen reduzierten Materialabrieb durch einen Kontakt mit der zylindrischen Fläche.

Um zwischen den Gleitflächen und der zylindrischen Fläche, auf welcher die Gleitflächen gleiten, eine geringe Kontaktfläche bereitzustellen und so einen maximal möglichen Abrieb, welcher das Füllgut verunreinigen kann, möglichst gering zu halten, können die Gleitflächen eine konkave Krümmung mit einem Radius aufweisen, welcher kleiner oder größer ist als der Radius des Gleitteilkreises, wenn die erste Seite der Innenseite entspricht, oder alternativ die Gleitflächen eine konvexe Krümmung mit einem Radius aufweisen, welcher kleiner oder größer ist als der Radius des Gleitteilkreises, wenn die erste Seite der Außenseite des Grundkörpers entspricht.

Gemäß der Erfindung sind jeweils ein Gleitbereich und ein Stützbereich in Umfangsrichtung des Grundkörpers gesehen an im Wesentlichen gleicher Stelle gegenüberliegend angeordnet. So kann eine besonders genaue Führung der Zentrierglocke erzielt werden. Durch diese Ausgestaltung ist zumindest in radialer Richtung eine besonders direkte Kraftübertragung zwischen Füllrohr, Führungsring und Zentrierglocke ermöglicht.

Gemäß einer Weiterbildung weisen die Stützbereiche jeweils mindestens eine Stützfläche zum radialen und/oder axialen Abstützen auf, wobei jeder Stützbereich bevorzugt zwei sich in axialer Richtung gesehen gegenüberliegende, zur axialen Richtung geneigte und/oder abgerundete Stützflächen aufweist, welche derart ausgebildet sind, dass über beide Stützflächen ein radiales Abstützen und ein axiales Abstützen ermöglicht ist, wobei über eine erste der beiden Stützflächen eines Stützbereichs ein axiales Abstützen in einer ersten Richtung ermöglicht ist und über eine zweite der beiden Stützflächen des gleichen Stützbereichs ein axiales Abstützen in einer der ersten Richtung entgegengesetzten zweiten Richtung ermöglicht ist. Dadurch kann der Führungsring an der Abstützfläche sowohl in radialer als auch in axialer Richtung abgestützt werden, der Führungsring mithin relativ zum die mindestens eine Abstützfläche aufweisenden Bauteil sowohl axial als auch radial in einer festen Position gehalten werden.

Es hat sich als besonders vorteilhaft herausgestellt, wenn zumindest eine Stützfläche eine doppelte Krümmung aufweist. Durch eine erste Krümmung können die zwei sich gegenüberliegenden radialen Stützflächen realisiert werden. Die Größe der Kontaktfläche dieser Stützflächen zur Abstützfläche kann durch das vorsehen der zweiten Krümmung im Vergleich zu Stützflächen mit einer Krümmung reduziert werden. Durch die Reduzierung der Kontaktfläche kann auch ein Abrieb an dieser Kontaktfläche entsprechend verringert sein.

Ein besonders einfacher Aufbau des Führungsrings kann erzielt werden, wenn der Führungsring einstückig ausgebildet ist und/oder ein Spritzgussteil, ein Frästeil, ein Drehteil, oder ein 3D-Druck-Teil ist.

Gemäß einer Weiterbildung stehen die Stützbereiche und/oder die Gleitbereiche in axialer Richtung von dem Grundkörper auf mindestens einer Seite des Grundkörpers vor. Hierdurch lassen sich die Strömungskanäle im Vergleich weiter vergrößern, da ein Abstand zwischen Grundkörper und Abstützfläche beziehungsweise zylindrischer Oberfläche nochmals größer ist.

Es hat sich gezeigt, dass ein besonders vorteilhafter Führungsring erhalten werden kann, wenn entlang des Grundkörpers eine Mehrzahl von vom Grundkörper radial umlaufend hervorgehobenen Noppen angeordnet ist, wobei jede Noppe einen Gleitbereich und einen Stützbereich aufweist. Mit anderen Worten sind die Noppen des Führungsrings, welche sowohl die Funktion des Stützen als auch des Gleitens bereitzustellen, über Stege miteinander verbunden, wobei der Grundkörper die Stege bereitstellt.

Gemäß einer Weiterbildung erstreckt der Grundkörper sich in einem Kreisbogensegment, wobei der offene Bereich des Kreisbogensegments größer ist, als eine Längenzunahme des Grundkörpers in Umfangsrichtung aufgrund einer Temperaturänderung in einem vorgegebenen Temperaturbereich.

Mit anderen Worten weist der Grundkörper keinen durchgehenden Kreisring auf, sondern ist an einer Stelle in Umfangsrichtung gesehen unterbrochen. Dadurch kann der Führungsring beispielsweise in einfacher Weise radial auf das Füllrohr aufgeschoben beziehungsweise aufgeclipst werden, oder durch radiales Komprimieren in die Zentrierglocke eingeschoben werden, um dann beispielsweise in einer vorgesehenen Aussparung einzurasten. Bei einem Kreisbogensegment ist im Gegensatz zu einem vollen Kreisring bei einer Temperaturveränderung im Wesentlichen lediglich die Wärmeausdehnung in Umfangsrichtung zu berücksichtigen. Die Toleranzen zur Führung der Zentrierglocke an dem Füllrohr können dadurch sehr eng gewählt werden.

Wenn der Grundkörper in Bezug auf eine in einer Einbauposition vorgesehenen Form des Führungsrings eine radial nach außen geweitete oder eine nach innen verengte Form aufweist, kann der Führungsring mit einer Vorspannung in der Einbauposition bereitgestellt werden. Die Einbauposition ist dabei im Wesentlichen durch den Innendurchmesser der Zentrierglocke im Bereich des Führungsrings beziehungsweise durch den Außendurchmesser des Füllrohrs im Bereich des Führungsrings vorgegeben. Weist der Grundkörper im nicht verbauten Zustand entsprechend eine radial nach außen geweitete Form auf, so erfährt er beim Einbau in die Zentrierglocke, da der Innendurchmesser der Zentrierglocke dann kleiner ist als zumindest ein äußerstes Teilkreissegment des Führungsrings, eine Verformung nach radial innen. Dies hat zur Folge, dass der Führungsring mit einer gewissen Vorspannung, welche im Wesentlichen durch den Grundkörper beziehungsweise dessen Verformung durch den Einbau vorgegeben ist, gegenüber der Zentrierglocke vorliegt. Die Vorspannung kann dabei derart vorgegeben werden, dass der Führungsring über die Vorspannung in der Zentrierglocke an einer festen Position gehalten werden kann, was einen Zusammenbau vereinfachen kann. Entsprechendes gilt bei einer radial nach innen verengten Form bezüglich des Füllrohrs.

Gemäß einer Weiterbildung ist der Führungsring derart ausgebildet, dass bei einer Umströmung des Führungsrings mit einem Fluid in axialer Richtung durch das Fluid eine resultierende Kraft in Umfangsrichtung auf den Führungsring wirkt, wobei der Führungsring bevorzugt im Wesentlichen symmetrisch ausgebildet ist und zusätzlich eine asymmetrische Drallfäche aufweist, welche derart angeordnet ist, dass bei Umströmung des Führungsrings mit dem Fluid in axialer Richtung durch das Fluid eine Kraft in Umfangsrichtung auf den Führungsring erzeugt wird. Dies kann zur Folge haben, dass bei Umströmen des Führungsrings mit einem Reinigungsmedium der Führungsring eine asymmetrische Anströmung erfährt und aufgrund des dadurch entstehenden Dralls in Umfangsrichtung gesehen eine Positionsänderung erfahren kann. Dadurch ist es möglich, dass im Wesentlichen die gesamte zylindrische Oberfläche und die gesamte Abstützfläche mit dem Reinigungsfluid in Kontakt kommen können. Folglich kann eine besonders vollständige Reinigung erzielt werden.

Wenn gemäß einer Weiterbildung eine maximale Breite des Grundkörpers senkrecht zur axialen Richtung des Führungsrings kleiner oder gleich 2/3, bevorzugt 1/2, besonders bevorzugt 1/4 einer maximalen Breite des Führungsrings senkrecht zur axialen Richtung entspricht, und/oder eine maximale Höhe des Grundkörpers parallel zur axialen Richtung des Führungsrings kleiner oder gleich 4/5, bevorzugt 3/5 einer maximalen Höhe des Führungsrings parallel zur axialen Richtung entspricht, kann erzielt werden, dass die dadurch bereitgestellten Strömungskanäle für das Medium, welches den Bereich des Führungsrings passieren soll, derart groß sind, dass keine signifikante Behinderung des Strömen des Mediums erfolgt.

Weiterhin beschrieben ist ein Füllorgan gemäß der nachfolgenden Beschreibung.

Entsprechend wird ein Füllorgan zum Befüllen eines Behälters mit einem fließfähigen Füllgut vorgeschlagen, bevorzugt zum Befüllen einer Dose oder einer Flasche mit einem Getränk, umfassend zwei konzentrisch zueinander angeordnete, entlang einer Längsachse relativ zueinander bewegliche Bauteile, wobei sich ein erstes der zwei Bauteile radial außerhalb des zweiten der zwei Bauteile erstreckt. Das Füllorgan kennzeichnet sich dadurch, dass zwischen einer Außenseite des zweiten Bauteils und einer Innenseite des ersten Bauteils zumindest ein Führungsring gemäß einem der vorstehenden Ansprüche zum Führen des ersten Bauteils gegenüber dem zweiten Bauteil oder angeordnet ist.

Dadurch dass zwischen der Außenseite des zweiten Bauteils und der Innenseite des ersten Bauteils zumindest ein Führungsring gemäß einem der vorstehenden Ausführungsformen zum Führen des ersten Bauteils gegenüber dem zweiten Bauteil angeordnet ist, können die zum Führungsring beschriebenen Vorteile und Wirkungen analog erzielt werden.

Die vorgenannten Vorteile und Wirkungen ergeben sich in besonders vorteilhafter Weise, wenn gemäß einer weiter bevorzugten Ausführungsform das zweite Bauteil ein Füllrohr zum Bereitstellen eines Füllgutstromes ist und das erste Bauteil eine sich radial außerhalb des Füllrohrs erstreckende, relativ zum Füllrohr entlang der Längsachse des Füllrohrs bewegliche Zentrierglocke zum Zentrieren und/oder Abdichten einer Behälteröffnung ist.

Gemäß einer Weiterbildung ist zwischen einer Außenseite des zweiten Bauteils, bevorzugt des Füllrohrs, und einer Innenseite des ersten Bauteils, bevorzugt der Zentrierglocke, ein Rückgaskanal zum Rückführen von durch einströmendes Füllgut aus dem Behälter verdrängtem Gasen ausgebildet, wobei mindestens ein Führungsring in dem Rückgaskanal angeordnet ist. Durch den Führungsring ist ermöglicht, dass bei einem Befüllen eines Behälters mit dem Füllgut verdrängtes Gas durch den Rückgaskanal auch über den Führungsring hinweg strömen kann. Mithin ist trotz des Vorsehens des Führungsrings in dem Rückgaskanal weiterhin eine zuverlässige Entgasung möglich.

Um das erste Bauteil, bevorzugt eine Zentrierglocke, stabil gegenüber dem zweiten Bauteil, bevorzugte einem Füllrohr, gleitend zu lagern, kann gemäß einer weiter bevorzugten Ausführungsform eine Mehrzahl von Führungsringen in Richtung der Längsachse beabstandet voneinander zwischen dem ersten Bauteil und dem zweiten Bauteil, bevorzugt dem Füllrohr und der Zentrierglocke, zum Führen des ersten Bauteils gegenüber dem zweiten Bauteil, bevorzugt der Zentrierglocke gegenüber dem Füllrohr, angeordnet sein, wobei bevorzugt zwei Führungsringe vorgesehen sind.

Gemäß einer Weiterbildung ist an der Innenseite des ersten Bauteils, bevorzugt der Zentrierglocke, eine Nut, bevorzugt eine V-förmige Nut, zum Aufnehmen der Stützbereiche eines Führungsrings vorgesehen ist, und/oder an der Außenseite des zweiten Bauteils, bevorzugt des Füllrohrs, eine Nut, bevorzugt eine V-förmige Nut, zum Aufnehmen der Stützbereiche eines Führungsrings vorgesehen. Durch die V-förmige Nut kann ein Abstützen der Stützbereiche sowohl in radialer Richtung als auch in zwei gegenseitig orientierte axiale Richtungen erfolgen.

Unter dem Begriff "V-förmige Nut" wird hierbei jede Form verstanden, bei welcher zwei Flächen einer Nut einen Winkel größer 0° und kleiner 180° einschließen, wobei diese beiden Flächen als Abstützfläche fungieren.

Wenn jeder Stützbereich des Führungsrings zwei sich in axialer Richtung gesehen gegenüberliegende Stützflächen aufweist, wobei eine erste der Stützflächen mit einer ersten Fläche der V-förmigen Nut in Kontakt steht und eine zweite der Stützflächen mit einer zweiten Fläche der V-förmigen Nut in Kontakt steht, kann ein Abstützen des Führungsrings in axialer Richtung gesehen beidseitig erfolgen.

Um einen Kontaktbereich zwischen den Stützflächen und der mindestens einen Abstützfläche möglichst klein auszubilden, können die Stützflächen eine abgerundete Zone aufweisen, wobei die Stützflächen jeweils mit der abgerundeten Zone mit den entsprechenden Flächen der V-förmigen Nut in Kontakt stehen, derart, dass zwischen einer Stützfläche und der Nut jeweils ein Punktkontakt oder ein Linienkontakt vorliegt. Die Begriffe Punktkontakt beziehungsweise Linienkontakt sind hierbei makroskopisch zu verstehen und sind nicht auf einen Punkt beziehungsweise eine Linie beschränkt. Vielmehr ist darunter ein im Vergleich zu einem vollflächigen Kontakt reduzierter Kontaktbereich zu verstehen. Die Begriffe umfassen folglich ebenfalls flächige Kontakte, welche beispielsweise durch eine Hertz'sche Pressung zweier elastischer Körper entstehen.

Gemäß einer Weiterbildung umfasst das Füllorgan ferner einen Drallkörper zum Erzeugen einer drallbeaufschlagten Strömung im Bereich eines Führungsrings. Dadurch ist es möglich, einen Drall in den Führungsring einzuleiten, auch wenn dieser im Wesentlichen symmetrisch aufgebaut ist. Die drallbeaufschlagte Strömung kann bewirken, dass der Führungsring beim Umströmen mit einem Reinigungsmedium in Umfangsrichtung eine Bewegung erfährt, sodass das Reinigungsmedium auch die Bereiche der Abstützflächen und der zylindrischen Oberfläche reinigen kann, welche vor der Bewegung des Führungsrings mit diesem Kontakt standen.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht eines Führungsrings zum Führen zweier konzentrisch zueinander angeordneter Bauteile in einem Füllorgan gemäß einer ersten Ausführungsform;
- Figur 2: schematisch eine Draufsicht des Führungsrings aus Figur 1;
- Figur 3: schematisch eine Schnittansicht durch den Führungsring aus Figur 2;
- Figur 4: schematisch eine weitere Schnittansicht durch den Führungsring aus Figur 2;
- Figur 5: schematisch eine perspektivische Seitenansicht eines Führungsrings zum Führen zweier konzentrisch zueinander angeordneter Bauteile in ein Füllorgan gemäß einer weiteren Ausführungsform;
- Figur 6: schematisch eine Draufsicht des Führungsring aus Figur 5;
- Figur 7: schematisch eine Seitenansicht des Führungsrings aus Figur 5;
- Figur 8: schematisch eine perspektivische Seitenansicht eines Füllorgans zum Befüllen eines Behälters mit einem fließfähigen Füllgut;
- Figur 9: schematisch eine Schnittansicht durch das Füllorgan aus Figur 8;
- Figur 10: schematisch eine weitere Schnittansicht durch das Füllorgan aus Figur 8; und
- Figur 11: schematisch eine Schnittansicht durch ein Füllorgan zum Befüllen eines Behälters mit einem vielfältigen Füllgut gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

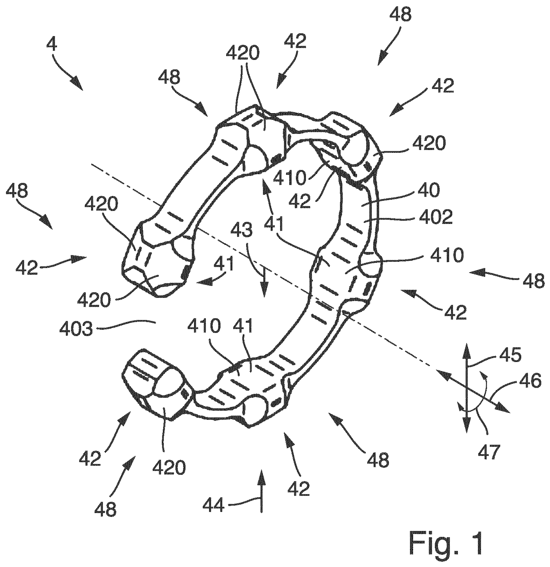

In Figur 1 ist schematisch eine perspektivische Seitenansicht eines Führungsrings zum Führen zweier konzentrisch zueinander angeordneter Bauteile in einem Füllorgan gemäß einer ersten Ausführungsform gezeigt. Der Führungsring 4 weist einen Grundkörper 40 auf, welcher im Wesentlichen die Form eines Kreisringsegments beziehungsweise eines Kreisbogensegments 402 aufweist. An dem Grundkörper 40 sind eine Mehrzahl von voneinander beabstandeten, radial auf einer ersten Seite 43 des Grundkörpers 40 vorstehenden Begleitbereichen 41 zum Gleiten über eine zylindrische Oberfläche und eine Mehrzahl von voneinander beabstandeten, radial auf einer der ersten Seite 43 gegenüberliegenden zweiten Seite 44 vorstehenden Stützbereichen 42 zum radialen und axialen Abstützen gegen zumindest eine Abstützfläche angeordnet.

Hierbei sind jeweils ein Gleitbereich 41 und ein Stützbereich 42 in Umfangsrichtung 47 des Grundkörpers 40 gesehen an im Wesentlichen gleicher Stelle in radialer Richtung 44 gesehen gegenüberliegend angeordnet. Der Grundkörper 40 weist mithin eine Mehrzahl von vom Grundkörper 40 radial umlaufend nach innen und außen hervorgehobenen Noppen 48 auf, wobei jede Noppe 48 einen Gleitbereich 41 und einen Abstützbereich 42 aufweist.

Vorliegend entspricht die erste Seite 43 in radialer Richtung 45 gesehen einer Innenseite des Grundkörpers 40 und die zweite Seite 44 entsprechend in radialer Richtung 45 gesehen einer Außenseite des Grundkörpers 40.

Alternativ können die Gleitbereiche 41 und die Stützbereiche 42 andersherum angeordnet sein, wenn ansprechend die erste Seite in radialer Richtung zum 40 gesehen einer Außenseite des Grundkörpers 40 und die zweite Seite in radialer Richtung 45 gesehen einer Innenseite des Grundkörpers 40 entspricht.

Jeder der Gleitbereiche 41 weist eine Gleitfläche 410 auf, mit welcher er im eingebauten Zustand im Füllorgan mit der zylindrischen Oberfläche in Kontakt steht.

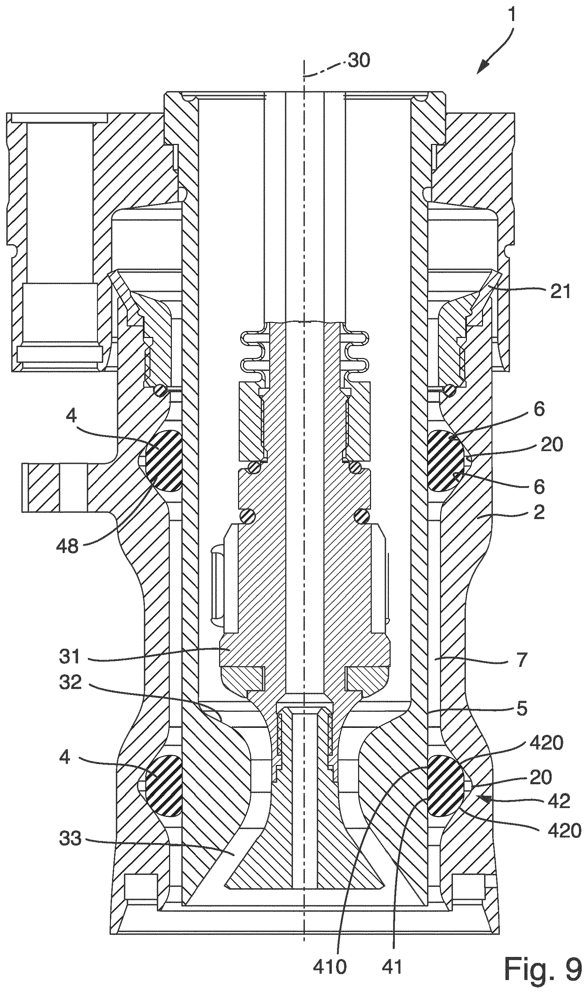

Ferner weist jeder der Stützbereiche 42 jeweils zwei sich in axialer Richtung 46 gesehen gegenüberliegende, zur axialen Richtung 46 geneigte und abgerundete Stützflächen 420 auf. Die Stützflächen 420 sind dabei derart ausgebildet, dass über beide Stützflächen 420 ein radiales Abstützen möglich ist. Sie sind zudem derart ausgebildet, dass über eine erste der beiden Stützflächen 420 ein axiales Abstützen in einer ersten Richtung ermöglicht ist und über eine zweite der beiden Stützflächen 420 des gleichen Schutzbereichs 42 ein axiales Abstützen in einer der ersten Richtung entgegengesetzten zweiten Richtung ermöglicht ist. Näheres zum Abstützen des Führungsrings 4 in einem Füllorgan ist weiter unten zu Figur 9 beschrieben.

Der Führungsring 4 ist vorliegend einstückig ausgebildet und ist mittels Spritzgießen oder einem 3D -Druck-Verfahren herstellbar.

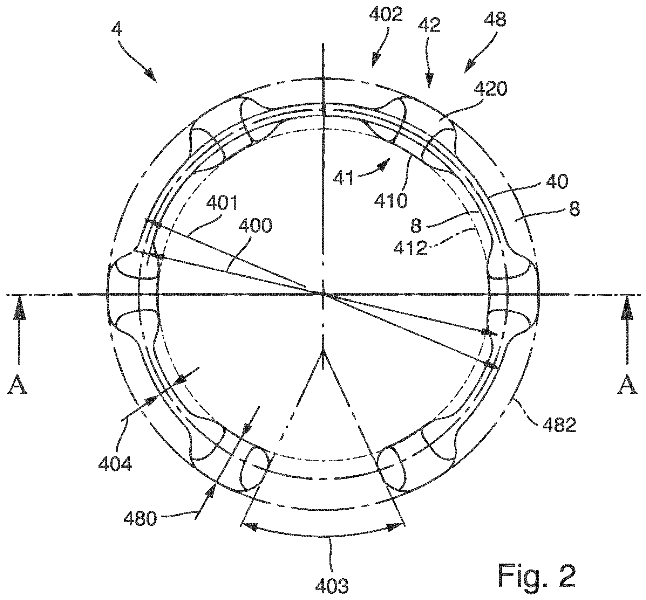

Figur 2 zeigt schematisch eine Draufsicht des Führungsrings 4 aus Figur 1. Deutlich zu erkennen ist hier, dass die Gleitflächen 420 in radialer Richtung 45 gesehen auf einem Gleitteilkreis 412 angeordnet sind. Der Radius des Gleitteilkreises 412 ist dabei kleiner als ein Innenradius 400 des kreisringsegmentförmigen Grundkörpers 40, sodass die Gleitbereiche 41 in radialer Richtung 45 gesehen von dem Grundkörper 40 nach innen vorstehen.

Analog erstrecken sich die Stützbereiche 42 bis zu einem maximalen Durchmesser 482 des Führungsrings 4, welcher größer ist als ein Außenradius 401 des kreisringsegmentförmigen Grundkörpers 40. Entsprechend stehen die Stützbereiche 42 teilweise in radialer Richtung zum Grundkörper 40 gesehen von dem Grundkörper 40 nach außen vor. Entsprechend ergibt sich, dass eine Breite 404 des Grundkörpers 40 kleiner ist als eine maximale Breite 480 einer Noppe 84. Dadurch sind im Bereich des Grundkörpers 40 zwischen dem Gleitteilkreis 412 und dem Grundkörper 40, sowie zwischen dem maximalen Durchmesser 482 und dem Grundkörper 40 jeweils Strömungskanäle 8 bereitgestellt, durch welche ein strömungsfähiges Medium in axialer Richtung 46 über den Führungsring 4 hinweg strömen kann. Der Führungsring 4 eignet sich mithin zum Einsatz in einem Medienkanal, beispielsweise in einem Rückgaskanal oder einem Spülkanal des Füllorgans.

Wie oben bereits beschrieben, erstreckt sich der Grundkörper in einem Kreisringsegment beziehungsweise Kreisbogensegment 402. Er weist mithin in Umfangsrichtung 47 gesehen einen offenen Bereich 403 auf. Der offene Bereich 403 ist dabei größer als eine Längenzunahme des Grundkörpers 40 in Umfangsrichtung 47, welche aufgrund einer Temperaturerhöhung des Führungsrings 4 in einem vorgegebenen Temperaturbereich auftritt.

Durch das Vorsehen des offenen Bereichs 403 kann sich der Grundkörper 40 bei einer Temperaturzunahme entsprechend in Umfangsrichtung verlängern, ohne dass es zwingend zu einem Aufweiten des Führungsrings 4, mitten einer Durchmesserzunahme kommt. Entsprechend können die Toleranzen des Führungsrings 4 an den Gleitflächen 410 und den Stützflächen 420 enger gewählt werden, als bei durchgehenden Führungsringen.

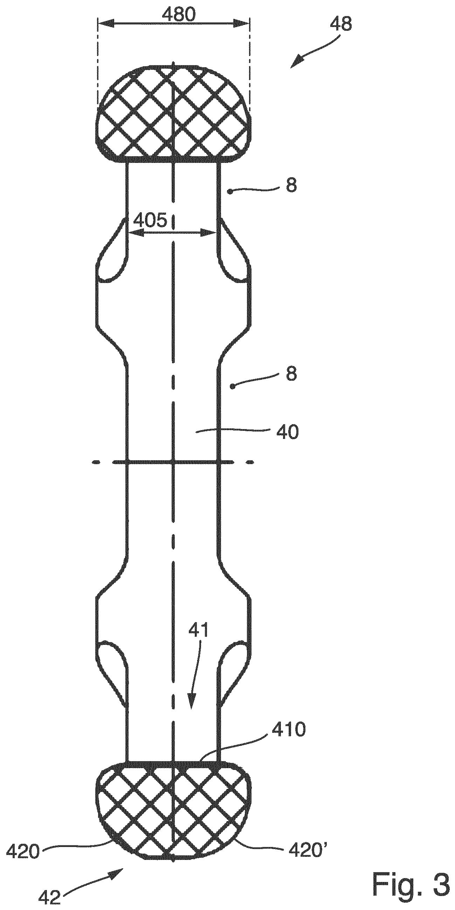

Figur 3 zeigt schematisch eine Schnittansicht durch den Führungsring 4 aus Figur 2 entlang der in Figur 2 gezeigten Schnittlinie A-A, welche durch zwei der Noppen 48 verläuft. Deutlich zu erkennen ist hier, dass die zur axialen Richtung 46 geneigten und abgerundeten Stützflächen 420 derart angeordnet sind, dass durch die erste Stützfläche, hier mit dem Bezugszeichen 420 gekennzeichnet, ein Abstützen in Bezug auf die Ausrichtung in Figur 3 gesehen axial nach links ermöglicht, sowie durch die zweite Stützfläche, hier mit dem Bezugszeichen 420' bezeichnet, ein Abstützen in Bezug auf die Ausrichtung in Figur 3 gesehen axial nach rechts ermöglicht ist. Aufgrund der Neigung der beiden Stützflächen 420, 420' ist zudem ein radiales Abstützen ermöglicht.

Die Noppen 48 weisen eine Breite 480 auf, welche größer ist als eine Breite 404 des Grundkörpers 40, wodurch sich die Größe der Strömungskanäle 8 weiter steigern lässt und so ein Widerstand beziehungsweise eine Behinderung für die Strömung eines Strömungsmediums in axialer Richtung 46 gesehen durch den Führungsring 4 im eingebauten Zustand nochmals verringert ist.

Mit anderen Worten stehen die Stützbereiche 42 und die Gleitbereiche 41 in axialer Richtung 46 gesehen von dem Grundkörper 40 auf beiden Seiten vor.

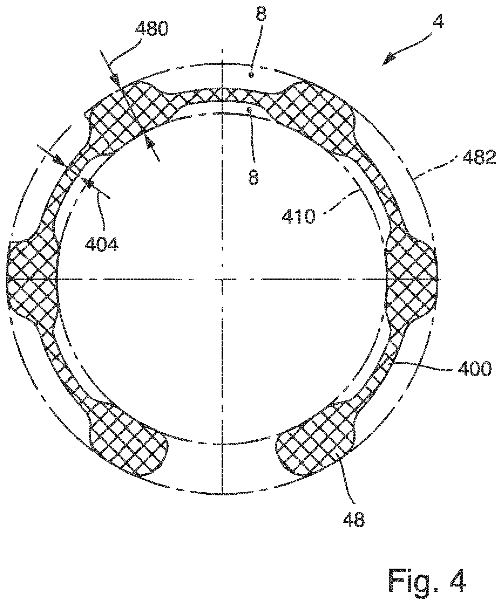

In Figur 4 ist schematisch eine weitere Schnittansicht durch den Führungsring 4 aus Figur 2 gezeigt. Da in dieser Ansicht der Führungsring 4 vollflächig geschnitten ist, lassen sich nochmals besonders gut die Strömungskanäle 8, welche zwischen dem Material des Führungsrings 4 und dem Gleitteilkreis 410 sowie dem maximalen Durchmesser 482 bereitgestellt sind, erkennen.

Der Führungsring 4 gemäß dieser Ausführungsform weist optional eine maximale Breite 404 des Grundkörpers 40 senkrecht zur axialen Richtung 46 auf, welche kleiner oder gleich 2/3 der maximalen Breite 480, vorliegend ¼ der Breite 480.

Zudem weist der Grundkörper 40 parallel zur axialen Richtung 46 eine maximale Höhe 405 auf, welche 3/5 der Höhe 481 entspricht.

Durch die so gewählten Breite 404 und Höhe 405 ist sichergestellt, dass die Strömungskanäle 8 groß genug sind, um ein Strömen eines Strömungsmediums, beispielsweise eines Reinigungsfluid, in axialer Richtung 46 nicht signifikant zu beeinflussen.

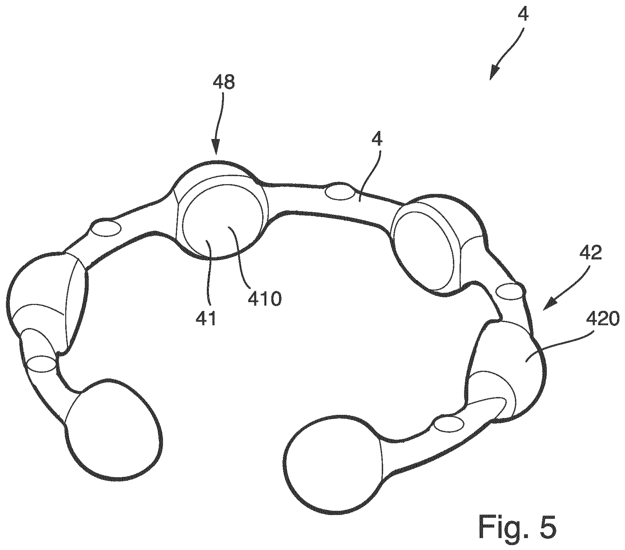

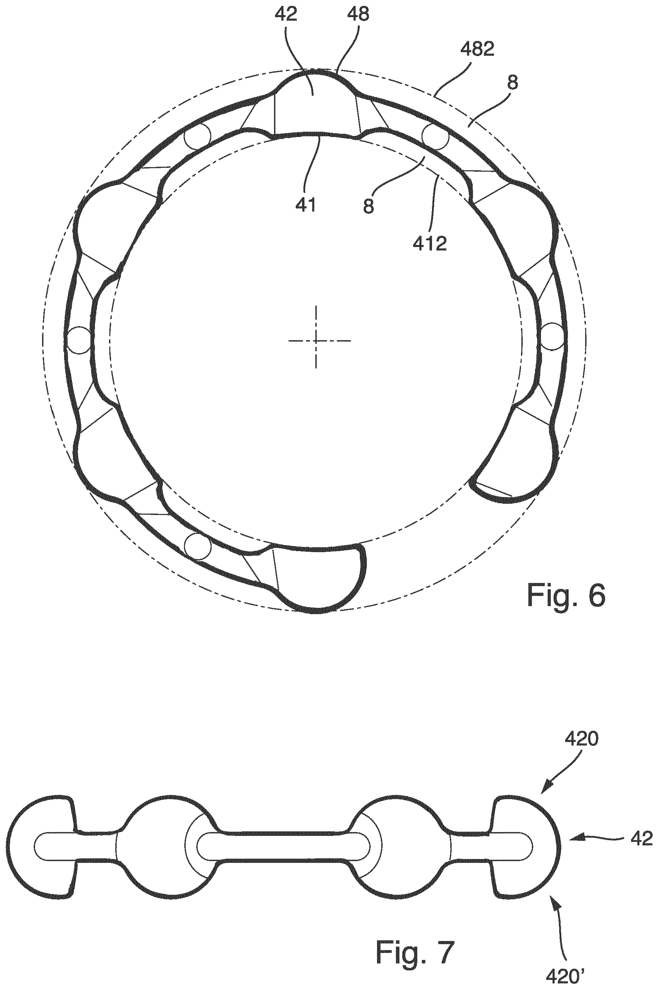

In den Figuren 5-7 ist ein Führungsring 4 zum Führen einer Zentrierglocke in ein Füllorgan gemäß einer weiteren Ausführungsform gezeigt. Der Führungsring 4 entspricht in seinem Aufbau im Wesentlichen dem in den Figuren 1-4 gezeigten.

Im Gegensatz zu der vorher beschriebenen Ausführungsform weist der in Figur 5 gezeigte Führungsring 4 Stützbereiche 42 auf deren Stützflächen 420 eine doppelte Krümmung aufweisen. Mit anderen Worten sind sie einerseits abgerundet, wie auch jene in Figur 1 gezeigt, und zusätzlich noch einmal mit einer Krümmung um eine Achse parallel zur axialen Richtung 46 versehen, welche größer ist als eine durch den maximalen Durchmesser 482 vorgegebene Krümmung, sodass die Stützbereiche im Wesentlichen eine halbkugelförmige Form aufweisen. Durch das Vorsehen der doppelten Krümmung bilden die Stützflächen 420 im eingebauten Zustand mit der jeweiligen Abstützfläche im Wesentlichen einen Punktkontakt aus, sodass die Abriebfläche des Stützbereichs besonders gering ist.

Die Gleitflächen 410 der Gleitbereiche 41 weisen eine konkave Krümmung mit einem Radius auf, welcher kleiner ist als der Radius des Gleitteilkreises 412. Alternativ kann der Radius der Gleitbereiche 41 auch größer sein als der Radius des Gleitteilkreises 412. Durch beide Varianten ist eine Kontaktfläche zwischen der zylindrischen Oberfläche und den Gleitflächen 410 geringer, als wenn der Radius des Gleitteilkreises 412 dem Radius der Gleitflächen 410 entspricht. Ist der Radius der Gleitflächen 410 kleiner als jener des Gleitteilkreises 412, so bildet jeder Gleitbereich 41 zwei Kontaktbereiche mit der zylindrischen Oberfläche aus. Ist der Radius der Gleitflächen 410 größer als jener des Gleitteilkreises 412, so bildet jeder Gleitbereich 41 einen Kontaktbereich mit der zylindrischen Oberfläche aus.

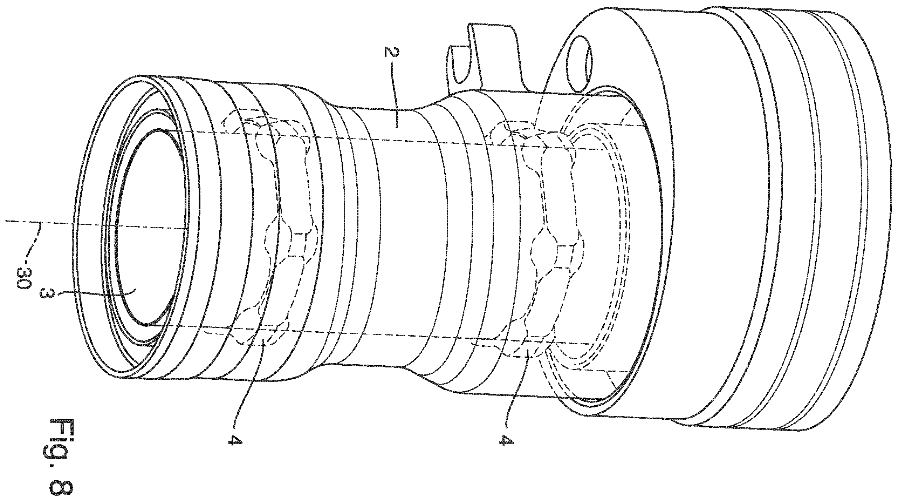

In Figur 8 ist schematisch eine perspektivische Seitenansicht eines Füllorgans 1 zum Befüllen eines Behälters mit einem fließfähigen Füllgut gezeigt. Das Füllrohr 1 ist vorliegend zum Befüllen einer Dose oder einer Flasche mit einem Getränk ausgebildet. Es umfasst ein Füllrohr 3 zum Bereitstellen eines Füllgutstromes, wobei das Füllrohr 3 einem zweiten Bauteil des Füllorgans 1 entspricht, und eine sich radial außerhalb des Füllrohrs 3 erstreckende, relativ zum Füllrohr 3 entlang einer Längsachse 30 des Füllrohrs 3 bewegliche Zentrierglocke 2 zum Zentrieren und oder Abdichten der Behälteröffnung, wobei die Zentrierglocke 2 einem ersten Bauteil des Füllorgans 1 entspricht. Das Füllorgan 1 weist ferner zwischen einer Außenseite des Füllrohrs 3 und einer Innenseite der Zentrierglocke 22 voneinander beabstandet angeordnete Führungsringe 4 zum Führen der Zentrierglocke 2 gegenüber dem Füllrohr 3 auf. Die Führungsringe 4 entsprechen der in den Figuren 1-4 beschriebenen Ausführungsform. Zur besseren Verständnis ist die Zentrierglocke 2 durchscheinend beziehungsweise teiltransparent dargestellt, sodass die Sicht auf das Füllrohr 3 sowie die Führungsringe 4 ermöglicht ist.

Figur 9 zeigt schematisch eine Schnittansicht durch das Füllorgan 1 aus Figur 8. Deutlich zu erkennen ist, dass zwischen der Außenseite des Füllrohrs 3 und der Innenseite der Zentrierglocke 2 ein Abstand beziehungsweise ein Ringspalt vorliegt, welcher in dieser Ausführungsform einen Rückgaskanal 7 für während des Befüllen des Behälters mit dem Füllgut aus dem Behälter verdrängtes Gas beziehungsweise verdrängte Luft bereitstellt. Die Führungsringe 4 sind dabei in dem Rückgaskanal 7 angeordnet.

Die Gleitbereiche 41 der Führungsringe 4 stehen mittels ihrer Gleitflächen 410 mit einer zylindrischen Oberfläche 5 der Außenseite des Füllrohrs 3 in gleitfähigen Kontakt.

Zum Stützen der Führungsringe 4 weist die Zentrierglocke 2 zwei V-förmige Nuten 20 auf, welche derart ausgebildet sind, dass ein Aufnehmen der Stützbereiche 42 der Führungsringe 4 ermöglicht ist. Die V-förmige Nuten 20 weisen dabei jeweils zwei zueinander geneigte Abstützflächen 6 auf, wobei jeweils eine Abstützfläche 6 mit jeweils einer Stützfläche 420 einer Noppe 48 in Kontakt steht. Dadurch ist der Führungsring 4 gegenüber der Zentrierglocke 2 sowohl in radialer Richtung als auch in axialer Richtung fixiert.

Folglich kann die Zentrierglocke 2 gegenüber dem Füllrohr 3 in Richtung der Längsachse 30 verschoben werden, wobei die Führungsringe 4 aufgrund der Aufnahme in den Nuten 20 relativ zur Zentrierglocke 2 in einer festen Position verbleiben, und sich die Baugruppe aus Zentrierglocke 2 und den Führungsringen 4 relativ zum Füllrohr 3 in Richtung der Längsachse 30 verschieben lässt. Um eine Abdichtung des Rückgaskanals 7 am oberen Ende der Zentrierglocke 2 zu erzielen, weist letztere einen Dichtring 21 auf, welcher an der oberen Stirnseite der Zentrierglocke 2 angeordnet ist und mit einem stehenden Teil des Füllorgans 1 in dichtenden Kontakt steht.

Im Inneren des Füllrohrs 3 ist ein Ventilkörper 31 vorgesehen, welcher relativ zum Füllrohr 3 axial verschiebbar angeordnet ist. Dadurch kann der Ventilkörper 31 relativ zu einem Ventilsitz 32 des Füllrohrs 3 verschoben werden, um einen Füllgutströmungskanal 33 für das Füllgut zu öffnen oder zu schließen.

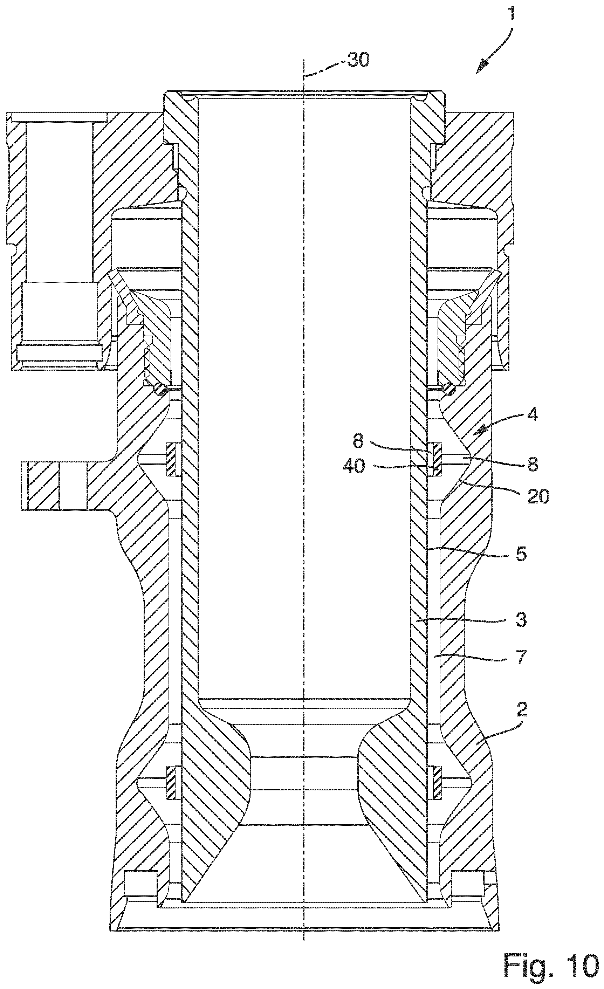

In Figur 10 ist schematisch eine weitere Schnittansicht durch das Füllorgan aus Figur 8 gezeigt. Hierbei verläuft der Schnitt nicht durch die Noppen 48, wie in Figur 9 gezeigt, sondern durch den Grundkörper 40, sodass die radial innerhalb und radial außerhalb des Grundkörpers 40 durch den Führungsring 4 bereitgestellten Strömungskanäle 8 zu sehen sind. Ein innerer Strömungskanal 8 erstreckt sich dabei zwischen der zylindrischen Oberfläche 5 des Füllrohrs 3 und dem Grundkörper 40, und ein äußerer Strömungskanal 8 erstreckt sich zwischen dem Grundkörper 40 und der V-förmige Nut 20.

Der Grundkörper 40 weist in Bezug auf eine in einer Einbauposition vorgesehenen Form des Führungsrings 4, wie sie in den Figuren 9 und 10 gezeigt ist, eine radial nach außen geweitete Form auf. Dadurch ist es möglich, die Führungsringe 4 in die V-förmigen Nuten einzuclipsen. Mit anderen Worten liegt der Führungsring 4 in seiner in den Figuren 9 und 10 gezeigten Einbauposition in einem gegen die Abstützflächen 6 der Zentrierglocke 2 vorgespannten Zustand vor. Der Führungsring ist aufgrund dieser Vorspannung mithin sicher in der V-förmigen Nut 20, auch wenn die Zentrierglocke 2 nicht an dem Füllrohr 3 montiert ist.

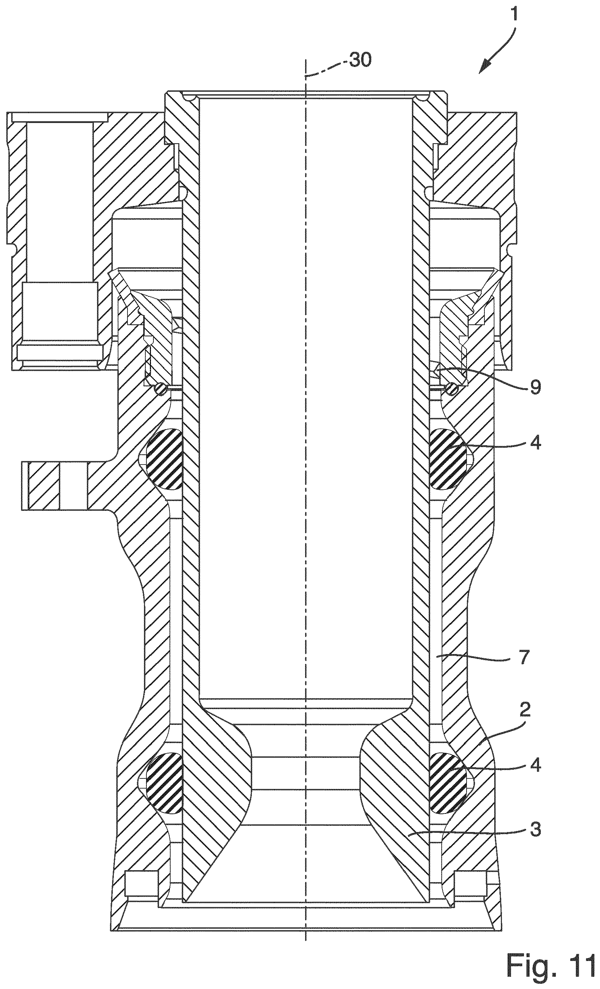

Figur 11 zeigt schematisch eine Schnittansicht durch ein Füllorgan 1 zum Befüllen eines Behälters mit einem fließfähigem Füllgut gemäß einer weiteren Ausführungsform. Das Füllorgan 1 entspricht im Wesentlichen dem in Figur 8-10 gezeigten, wobei im oberen Bereich der Zentrierglocke 2 ein Drallkörper 9 vorgesehen ist. Der Drallkörper 9 ist vorliegend in Form einer bezogen auf die Längsachse 30 spiralförmig ausgebildeten erhabenen Kante an der Innenseite der Zentrierglocke 2 ausgebildet. Durch den Drallkörper 9 erfährt ein in Bezug auf die Anordnung in Figur 11 gesehen von oben kommendes Reinigungsmedium, welches durch den Rückgaskanal 7 beispielsweise bei einer CIP-Einigung geleitet wird, eine drallbeaufschlagte Strömung, sodass das Reinigungsmedium die Führungsringe 4 nicht in Richtung der Längsachse 30, sondern in einem gewissen Winkel dazu anströmt. Dadurch wird auf die Führungsringe 4 jeweils ein Drall beziehungsweise ein Drehmoment um die Längsachse 30 ausgeübt, sodass die Führungsringe 4 während des Umströmens mit dem Reinigungsmedium in Umfangsrichtung verschoben werden. Dadurch ist es möglich, dass die Abstützfläche in 6 sowie die zylindrische Oberfläche 5 komplett durch das Reinigungsmedium gereinigt werden.

### Bezugszeichenliste

- 1: Füllorgan
- 2: Zentrierglocke
- 20: Nut
- 21: Dichtring
- 3: Füllrohr
- 30: Längsachse
- 31: Ventilkörper
- 32: Ventilsitz
- 33: Füllgutströmungskanal
- 4: Führungsring
- 40: Grundkörper
- 400: Innenradius
- 401: Außenradius
- 402: Kreisringsegment
- 403: Offener Bereich
- 404: Breite
- 405: Höhe
- 41: Gleitbereich
- 410: Gleitfläche
- 412: Gleitteilkreis
- 42: Stützbereich
- 420: Stützfläche
- 43: Erste Seite
- 44: Zweite Seite
- 45: Radiale Richtung
- 46: Axiale Richtung
- 47: Umfangsrichtung
- 48: Noppe
- 480: Breite
- 481: Höhe
- 482: Maximaler Durchmesser
- 5: Zylindrische Oberfläche
- 6: Abstützfläche
- 7: Rückgaskanal
- 8: Strömungskanal
- 9: Drallkörper

## Patentansprüche

1. Führungsring (4) zum Führen zweier konzentrisch zueinander angeordneter Bauteile, bevorzugt einer Zentrierglocke (2) gegenüber einem Füllrohr (3), in einem Füllorgan (1), umfassend einen im Wesentlichen kreisringsegmentförmigen Grundkörper (40), wobei an dem Grundkörper (40) eine Mehrzahl von voneinander beabstandeten, radial auf einer ersten Seite (43) des Grundkörpers (40) vorstehenden Gleitbereichen (41) zum Gleiten über eine zylindrische Oberfläche (5) und eine Mehrzahl von voneinander beabstandeten, radial auf einer der ersten Seite (43) gegenüberliegender zweiten Seite (44) vorstehenden Stützbereichen (42) zum radialen oder radialen und axialen Abstützen gegen zumindest eine Abstützfläche (6) angeordnet sind,
**dadurch gekennzeichnet, dass**
jeweils ein Gleitbereich (41) und ein Stützbereich (42) in Umfangsrichtung des Grundkörpers (40) gesehen an im Wesentlichen gleicher Stelle gegenüberliegend angeordnet sind.

2. Führungsring (4) nach Anspruch 1, **dadurch gekennzeichnet, dass** die erste Seite (43) in radialer Richtung gesehen einer Innenseite des Grundkörpers (40) entspricht und die zweite Seite (44) in radialer Richtung gesehen einer Außenseite des Grundkörpers (40) entspricht, **oder dass** die erste Seite in radialer Richtung gesehen einer Außenseite des Grundkörpers (40) entspricht und die zweite Seite in radialer Richtung gesehen einer Innenseite des Grundkörpers (40) entspricht.

3. Führungsring (4) nach Anspruch 1 oder 2, **dadurch gekennzeichnet, dass** die Gleitbereiche (41) jeweils mindestens eine Gleitfläche (410) aufweisen, wobei die Gleitflächen (410) bevorzugt in radialer Richtung auf einem Gleitteilkreis (412) angeordnet sind, wobei bevorzugt der Radius des Gleitteilkreises (412) kleiner oder gleich einem Innenradius (400) des Grundkörpers (40) ist, wenn die erste Seite (43) der Innenseite entspricht, oder der Radius des Gleitteilkreises (412) gleich oder größer einem Außenradius (401) des Grundkörpers (40) ist, wenn die erste Seite der Außenseite des Grundkörpers (40) entspricht.

4. Führungsring (4) gemäß Anspruch 3, **dadurch gekennzeichnet, dass** die Gleitflächen (410) eine konkave Krümmung mit einem Radius aufweisen, welcher kleiner oder größer ist als der Radius des Gleitteilkreises (412), wenn die erste Seite der Innenseite entspricht, oder die Gleitflächen (410) eine konvexe Krümmung mit einem Radius aufweisen, welcher kleiner oder größer ist als der Radius des Gleitteilkreises (412), wenn die erste Seite der Außenseite des Grundkörpers (40) entspricht.

5. Führungsring (4) nach einem der vorstehenden Ansprüche, **dadurch gekennzeichnet, dass** jeder Stützbereich (42) zwei sich in axialer Richtung gesehen gegenüberliegende, zur axialen Richtung geneigte und/oder abgerundete Stützflächen (420) aufweist, welche derart ausgebildet sind, dass über beide Stützflächen (420) ein radiales Abstützen und ein axiales Abstützen ermöglicht ist, wobei über eine erste der beiden Stützflächen (420) eines Stützbereichs ein axiales Abstützen in einer ersten Richtung ermöglicht ist und über eine zweite der beiden Stützflächen (420) des gleichen Stützbereichs (42) ein axiales Abstützen in einer der ersten Richtung entgegengesetzten zweiten Richtung ermöglicht ist, wobei vorzugsweise zumindest eine Stützfläche (420) eine doppelte Krümmung aufweist.

6. Führungsring (4) gemäß einem der vorstehenden Ansprüche, **dadurch gekennzeichnet, dass** der Führungsring (4) einstückig ausgebildet ist und/oder ein Spritzgussteil, ein Frästeil, ein Drehteil, oder ein 3D-Druck-Teil ist, **oder dass** die Stützbereiche (42) und/oder die Gleitbereiche (41) in axialer Richtung von dem Grundkörper (40) auf mindestens einer Seite des Grundkörpers (40) vorstehen, **oder dass** entlang des Grundkörpers (40) eine Mehrzahl von vom Grundkörper (40) radial umlaufend hervorgehobenen Noppen (48) angeordnet ist, wobei jede Noppe (48) einen Gleitbereich (41) und einen Stützbereich (42) aufweist.

7. Führungsring (4) gemäß einem der vorstehenden Ansprüche, **dadurch gekennzeichnet, dass** der Grundkörper (40) sich in einem Kreisbogensegment (402) erstreckt, wobei der offene Bereich des Kreisbogensegments (402) größer ist, als eine Längenzunahme des Grundkörpers (40) in Umfangsrichtung aufgrund einer Temperaturänderung in einem vorgegebenen Temperaturbereich, **oder dass** der Grundkörper (40) in Bezug auf eine in einer Einbauposition vorgesehenen Form des Führungsrings (4) eine radial nach außen geweitete oder eine nach innen verengte Form aufweist, **oder dass** der Führungsring (4) derart ausgebildet ist, dass bei einer Umströmung des Führungsrings (4) mit einem Fluid in axialer Richtung durch das Fluid eine resultierende Kraft in Umfangsrichtung auf den Führungsring (4) wirkt, wobei der Führungsring (4) bevorzugt im Wesentlichen symmetrisch ausgebildet ist und zusätzlich ein asymmetrische Drallfäche aufweist, derart angeordnet, so dass bei Umströmung des Führungsrings (4) mit dem Fluid in axialer Richtung durch das Fluid eine Kraft in Umfangsrichtung auf den Führungsring (4) erzeugt wird.

8. Führungsring (4) gemäß einem der vorstehenden Ansprüche, **dadurch gekennzeichnet, dass** eine maximale Breite (404) des Grundkörpers (40) senkrecht zur axialen Richtung des Führungsrings (4) kleiner oder gleich 2/3, bevorzugt 1/2, besonders bevorzugt 1/4 einer maximalen Breite (480) des Führungsrings (4) senkrecht zur axialen Richtung entspricht, **und/oder** eine maximale Höhe (405) des Grundkörpers (40) parallel zur axialen Richtung des Führungsrings (4) kleiner oder gleich 4/5, bevorzugt 3/5 einer maximalen Höhe (481) des Führungsrings (4) parallel zur axialen Richtung entspricht.

## Claims

1. Guide ring (4) for guiding two concentrically arranged components, preferably a centering bell (2) with respect to a fill pipe (3), in a filling member (1), the guide ring comprising a substantially ring-segment-shaped main body (40), wherein a plurality of spaced apart sliding regions (41), which project radially on a first face (43) of the main body (40), for sliding over a cylindrical surface (5), and a plurality of spaced apart support regions (42), which project radially on a second face (44) that is opposite the first face (43), for radial or radial and axial support against at least one support surface (6), are arranged on the main body (40),
**characterized in that**
one sliding area (41) and one support area (42) in each case are arranged opposite one another at substantially the same location when viewed in the circumferential direction of the base body (40).

2. Guide ring (4) according to claim 1, **characterized in that** the first face (43), when viewed in the radial direction, corresponds to an inner face of the main body (40), and the second face (44), when viewed in the radial direction, corresponds to an outer face of the main body (40), **or in that** the first face, when viewed in the radial direction, corresponds to an outer face of the main body (40), and the second face, when viewed in the radial direction, corresponds to an inner face of the main body (40).

3. Guide ring (4) according to claim 1 or 2, **characterized in that** the sliding regions (41) each have at least one sliding surface (410), wherein the sliding surfaces (410) are preferably arranged in the radial direction on a sliding pitch circle (412), wherein the radius of the sliding pitch circle (412) is preferably smaller than or equal to an inner radius (400) of the main body (40) when the first face (43) corresponds to the inner face, or the radius of the sliding pitch circle (412) is equal to or greater than an outer radius (401) of the main body (40) when the first face corresponds to the outer face of the main body (40).

4. Guide ring (4) according to claim 3, **characterized in that** the sliding surfaces (410) are concavely curved having a radius which is smaller or greater than the radius of the sliding pitch circle (412) when the first face corresponds to the inner face, or the sliding surfaces (410) are convexly curved having a radius which is smaller or greater than the radius of the sliding pitch circle (412) when the first face corresponds to the outer face of the main body (40).

5. Guide ring (4) according to any of the preceding claims,
**characterized in that** each support region (42) has two support surfaces (420) which, when viewed in the axial direction, are opposite one another, inclined with respect to the axial direction, and/or are rounded, and are configured such that radial support and axial support is provided by the two support surfaces (420), wherein axial support in a first direction is made possible by a first of the two support surfaces (420) of a support region, and axial support in a second direction, counter to the first direction, is made possible by a second of the two support surfaces (420) of the same support region (42), wherein preferably at least one support surface (420) has a double curvature.

6. Guide ring (4) according to any of the preceding claims,
**characterized in that** the guide ring (4) is formed in one piece and/or is an injection-molded part, a milled part, a turned part, or a 3D-printed part, or **in that** the support regions (42) and/or the sliding regions (41) protrude in the axial direction from the main body (40) on at least one face of the main body (40), **or in that** a plurality of knobs (48), radially circumferentially raised from the main body (40), are arranged along the main body (40), wherein each knob (48) has a sliding region (41) and a support region (42).

7. Guide ring (4) according to any of the preceding claims,
**characterized in that** the main body (40) extends in a circular arc segment (402), wherein the open region of the circular arc segment (402) is greater than an increase in length of the main body (40) in the circumferential direction caused by a temperature change within a predetermined temperature range, **or in that** the main body (40) has a radially outwardly widened or an inwardly narrowed shape with respect to a shape of the guide ring (4) provided in an installation position, **or in that** the guide ring (4) is configured such that, when a fluid flows around the guide ring (4) in the axial direction, the fluid causes a resulting force to act in the circumferential direction on the guide ring (4), wherein the guide ring (4) is preferably substantially symmetrical and additionally has an asymmetrical swirl surface arranged such that, when the fluid flows around the guide ring (4) in the axial direction, the fluid generates a force in the circumferential direction on the guide ring (4).

8. Guide ring (4) according to any of the preceding claims,
**characterized in that** a maximum width (404) of the main body (40) perpendicular to the axial direction of the guide ring (4) corresponds to less than or equal to 2/3, preferably 1/2, particularly preferably 1/4 of a maximum width (480) of the guide ring (4) perpendicular to the axial direction, **and/or** a maximum height (405) of the main body (40) parallel to the axial direction of the guide ring (4) corresponds to less than or equal to 4/5, preferably 3/5 of a maximum height (481) of the guide ring (4) parallel to the axial direction.

## Revendications

1. Anneau de guidage (4) permettant le guidage de deux composants disposés de manière concentrique l'un par rapport à l'autre, en particulier une cloche de centrage (2) face à un tube de remplissage (3), dans un organe de remplissage (1) comprenant un corps de base (40) sensiblement en forme de segment d'anneau circulaire, dans lequel sur le corps de base (40) sont disposées une pluralité de zones de glissement (41) espacées les unes des autres et faisant saillie radialement sur un premier côté (43) du corps de base (40) pour le glissement sur une surface cylindrique (5), et une pluralité de zones d'appui (42) espacées les unes des autres et faisant saillie radialement sur un second côté (44) opposé au premier côté (43) pour l'appui radial ou radial et axial contre au moins une surface d'appui (6),
**caractérisé en ce que**
respectivement une zone de glissement (41) et une zone d'appui (42) sont disposées de manière à être opposées l'une de l'autre à un emplacement sensiblement identique, vues dans la direction circonférentielle du corps de base (40).

2. Anneau de guidage (4) selon la revendication 1, **caractérisé en ce que** le premier côté (43), vu dans la direction radiale, correspond à un côté intérieur du corps de base (40) et le second côté (44), vu dans la direction radiale, correspond à un côté extérieur du corps de base (40), **ou en ce que** le premier côté, vu dans la direction radiale, correspond à un côté extérieur du corps de base (40) et le second côté, vu dans la direction radiale, correspond à un côté intérieur du corps de base (40).

3. Anneau de guidage (4) selon l'une des revendications 1 ou 2, **caractérisé en ce que** les zones de glissement (41) présentent respectivement au moins une surface de glissement (410), dans lequel les surfaces de glissement (410) sont de préférence disposées dans la direction radiale sur un cercle partiel de glissement (412), dans lequel de préférence le rayon du cercle partiel de glissement (412) est inférieur ou égal à un rayon intérieur (400) du corps de base (40) lorsque le premier côté (43) correspond au côté intérieur, ou le rayon du cercle partiel de glissement (412) est supérieur ou égal à un rayon extérieur (401) du corps de base (40) lorsque le premier côté correspond au côté extérieur du corps de base (40).

4. Anneau de guidage (4) selon la revendication 3, **caractérisé en ce que** les surfaces de glissement (410) présentent une courbure concave comportant un rayon qui est inférieur ou supérieur au rayon du cercle partiel de glissement (412) lorsque le premier côté correspond au côté intérieur, ou les surfaces de glissement (410) présentent une courbure convexe comportant un rayon qui est inférieur ou supérieur au rayon du cercle partiel de glissement (412) lorsque le premier côté correspond au côté extérieur du corps de base (40).

5. Anneau de guidage (4) selon l'une des revendications précédentes, **caractérisé en ce que** chaque zone d'appui (42) présente deux surfaces d'appui (420) opposées, vues dans la direction axiale, inclinées et/ou arrondies par rapport à la direction axiale et réalisées de telle sorte qu'un appui radial et un appui axial sont possibles par l'intermédiaire des deux surfaces d'appui (420), dans lequel un appui axial dans une première direction est possible par l'intermédiaire d'une première des deux surfaces d'appui (420) d'une zone d'appui et un appui axial dans une seconde direction opposée à la première direction est possible par l'intermédiaire d'une seconde des deux surfaces d'appui (420) de la même zone d'appui (42), dans lequel, de préférence, au moins une surface d'appui (420) présente une double courbure.

6. Anneau de guidage (4) selon l'une des revendications précédentes, **caractérisé en ce que** l'anneau de guidage (4) est réalisé d'une seule pièce et/ou est une pièce moulée par injection, une pièce fraisée, une pièce tournée, ou une pièce imprimée en 3D, **ou en ce que** les zones d'appui (42) et/ou les zones de glissement (41) font saillie dans la direction axiale du corps de base (40) sur au moins un côté du corps de base (40), **ou en ce qu'**une pluralité de plots (48) est disposée le long du corps de base (40), en saillie radialement sur la circonférence du corps de base (40), dans lequel chaque plot (48) présente une zone de glissement (41) et une zone d'appui (42).

7. Anneau de guidage (4) selon l'une des revendications précédentes, **caractérisé en ce que** le corps de base (40) s'étend dans un segment d'arc de cercle (402), dans lequel la zone ouverte du segment d'arc de cercle (402) est plus grande qu'une augmentation de longueur du corps de base (40) dans la direction circonférentielle en raison d'une variation de température dans une zone de température prédéterminée, **ou en ce que** le corps de base (40) présente une forme élargie radialement vers l'extérieur ou une forme rétrécie vers l'intérieur par rapport à une forme de l'anneau de guidage (4) prévue dans une position de montage, **ou en ce que** l'anneau de guidage (4) est réalisé de telle sorte que, lors d'un écoulement autour de l'anneau de guidage (4) avec un fluide dans la direction axiale, une force résultante du fluide agit dans la direction circonférentielle sur l'anneau de guidage (4), dans lequel l'anneau de guidage (4) est de préférence réalisé de manière sensiblement symétrique et présente en outre une surface de tourbillonnement asymétrique, disposée de telle sorte que, lors d'un écoulement autour de l'anneau de guidage (4) avec le fluide dans la direction axiale, une force est générée par le fluide dans la direction circonférentielle sur l'anneau de guidage (4).

8. Anneau de guidage (4) selon l'une des revendications précédentes, **caractérisé en ce qu'**une largeur (404) maximale du corps de base (40) qui est perpendiculaire à la direction axiale de l'anneau de guidage (4) est inférieure ou égale à 2/3, de préférence à 1/2, de manière particulièrement préférée à 1/4 d'une largeur (480) maximale de l'anneau de guidage (4) qui est perpendiculaire à la direction axiale, **et/ou** une hauteur (405) maximale du corps de base (40) qui est parallèle à la direction axiale de l'anneau de guidage (4) est inférieure ou égale à 4/5, de préférence à 3/5 d'une hauteur (481) maximale de l'anneau de guidage (4) qui est parallèle à la direction axiale.
